Europäisches Patentamt

European Patent Office

Office européen des brevets

(11) Veröffentlichungsnummer: **0 028 272**
**A1**

(12) ## EUROPÄISCHE PATENTANMELDUNG

(21) Anmeldenummer: 79200709.8

(22) Anmeldetag: 03.12.79

(51) Int. Cl.³: **H 04 L 9/02**

(30) Priorität: 03.11.79 CH 9860 79

(43) Veröffentlichungstag der Anmeldung:
13.05.81 Patentblatt 81/19

(84) Benannte Vertragsstaaten:
AT BE CH DE FR GB IT LU NL SE

(71) Anmelder: PATELHOLD Patentverwertungs- &
Elektro-Holding AG

Glarus(CH)

(72) Erfinder: Baldinger, Hans
Albisriederstrasse158
CH-8003 Zürich(CH)

(54) Verfahren und Einrichtung zur verschlüsselten Nachrichtenübertragung.

(57) Bei der Geheimübertragung von Nachrichten besteht das Problem der Synchronisierung des Wirksamwerdens von Schlüsselwechseln auf der Empfänger- und Senderseite ohne Verlust an übertragener Information und ohne Verbrauch von Uebertragungskapazität für besondere Synchronisierungssignale.

Hierzu wird eine sende- und empfangsseitige, modulierende bzw. demodulierende Schlüsselsignalfolge (w) durch Umschaltung in gleicher Weise und gleichzeitig verändert, und zwar durch vereinbarte Auswahl eines durch eine in den Teilnehmerstationen (S, E) synchrone Pseudo-Zufallsimpulsfolge (y) durch Untersetzungsmittel (ZZ) bestimmten Rahmen-Zeitintervalls, innerhalb dessen Vorbereitungs- und Auslöse-Schalthandlungen sowie gegebenenfalls die Vereinbarung über den Schlüsselwechsel auch manuell durchführbar sind. Die synchrone Aktivierung des neuen Schlüssels in beiden Stationen erfolgt dann durch den Endimpuls des Rahmen-Zeitintervalls, d.h. durch einen Impuls (g) zeitlicher Zuordnung zur Pseudo-Zufalls-impulsfolge (y).

./...

FIG. 2

Fd/dh

- 1 -

## Verfahren und Einrichtung zur verschlüsselten Nachrichten-übertragung

Die Erfindung bezieht sich auf ein Verfahren zur verschlüsselten Nachrichtenübertragung nach dem Oberbegriff des Patentanspruchs 1. Die Erfindung bezieht sich ferner auf eine Einrichtung zur Durchführung eines solchen Verfahrens nach dem Oberbegriff des Patentanspruchs 10.

Zur geheimen Nachrichtenübertragung werden auf der Sendeseite Klarsignale in unverständliche, verschlüsselte Signale umgewandelt, die nach der Uebertragung auf der Empfangsseite wieder in verständliche Klarsignale rückgewandelt werden. Für die vorliegende Erfindung sind die Klarsignale in Form von zeitlichen Signalfolgen anzunehmen, die auf der Sende- und Empfangsseite sowie im allgemeinen auch auf dem Uebertragungskanal in serieller Form auftreten. Demgemäss erfolgt die Verschlüsselung auf der Sendeseite und die Entschlüsselung auf der Empfangsseite durch laufende Modulation bzw. Demodulation der zugeführten Klarsignalfolge bzw. der empfangenen, verschlüsselten Signalfolge mit einer entsprechenden Schlüsselsignalfolge, die auf beiden Seiten übereinstimmend abläuft und durch den Schlüssel als Zuordnungsgesetz bestimmt ist, beispielsweise in Form eines algorith-

- 2 -

mischen Bildungsgesetzes in Verbindung mit Schlüsselzahlen zur Bestimmung des Anfangszustandes der Schlüsselsignalfolge.

Die Schlüsselsignalfolge bzw. der Schlüssel dürfen unbefugten Empfängern nicht bekannt sein, und diese Empfänger sollen auch nicht in der Lage sein, das Bildungsgesetz und die Schlüsselzahlen innerhalb einer zur Entschlüsselung ausreichenden Zeit zu erkennen, beispielsweise mit Hilfe mathematischer Methoden oder durch systematisches Versuchen. Bei den meisten Verschlüsselungseinrichtungen wird die Schlüsselsignalfolge mit einem Automaten gewonnen, dessen Schaltungsaufbau bzw. Schaltzustand das Bildungsgesetz des Schlüssels enthält und der in entsprechenden Speichermitteln mit einer Schlüsselzahl oder mehreren derselben versehen ist. Durch Verlust eines Gerätes, Verrat der Schlüsselzahl oder dgl. können gegebenenfalls auch Unbefugte in die Lage kommen, empfangene Signale zu entschlüsseln. Es empfiehlt sich deshalb, die Schlüsselzahlen oder die Einstellung des Schaltzustandes des Automaten in Zeitabständen oder in Abhängigkeit vom Eintritt aussergewöhnlicher Ereignisse zu ändern. Grundsätzlich kann man zwar Zeitpunkte für solche Massnahmen zwischen Sende- und Empfangsseite vereinbaren, vom Beginn bis zum Abschluss einer solchen Aenderung ist aber die Entschlüsselung unterbrochen. Dies ist vor allem bei Mehrkanalschlüsselungen störend, da viele Teilnehmer betroffen werden, die meistens nicht im Voraus benachrichtigt werden können.

Aus der CH-PS 578 807 ist ein Schlüsselungssystem mit gleichzeitiger Aenderung des zeitlichen Ablaufes der sende- und empfangsseitigen Schlüsselsignale bekannt, wobei die Umschaltung dieser Signalfolge im Empfänger durch die Uebertragung einer Umschalt-Impulsfolge mit der entsprechenden Umschaltung im Sender synchronisiert wird. In sogenannten transparenten Schlüsselungssystemen, bei denen jedem Bit am Klarsignaleingang genau ein Bit am Ausgang für das verschlüsselte Signal (Kryptosignal-Ausgang) entspricht, steht für die Uebertragung der Umschalt-Impulsfolge keine Kapazität des Uebertragungskanals bzw. kein entsprechendes Zeitintervall zur Verfügung.

Aufgabe der vorliegenden Erfindung ist daher die Schaffung eines Schlüsselungssystems, d.h. eines Verfahrens und einer entsprechenden Einrichtung, welches auch bei transparenter Schlüsselung eine gleichzeitige Aenderung der sende- und empfangsseitigen Schlüsselsignalfolge ohne Verlust der übertragenen Information ermöglicht. Das erfindungsgemässe Verfahren zur Lösung dieser Aufgabe kennzeichnet sich durch die Merkmale des Patentanspruchs 1, die zugehörige Einrichtungslösung durch diejenigen des Patentanspruchs 10.

Bei der sende- und empfangsseitig synchronen Zufallsimpulsfolge für die Erzeugung der Umschalt-Steuerimpulse kann es sich insbesondere um eine pseudo-zufällige Impulsfolge handeln, wie sie bekanntermassen mit Hilfe rückgekoppelter Schieberegister oder mit Hilfe von Schlüsselrechnern erzeugt werden kann. Diese Art der Impulserzeugung ermöglicht auf einfache Weise Synchronismus zwischen Sende- und Empfangsseite, weil die Erzeugung synchroner Impulsfolgen mit gegebenem Bildungsgesetz unter Verwendung von synchronen Takt- bzw. Schiebeimpulsen in beiden Stationen leicht möglich ist. Grundsätzlich kommt jedoch auch eine echte Zufallsimpulsfolge für die Erzeugung der Umschalt-Steuerim-

- 4 -

pulse in Betracht, wobei jedoch eine Synchronisierung durch geeignete Signalübertragung zwischen beiden Stationen durch den ohnehin vorhandenen Uebertragungskanal oder über einen anderweitigen Kanal erforderlich ist. Die vorgenannte, hauptsächlich interessante Lösungsvariante mit nur durch übereinstimmende Taktimpulsfolgen und im übrigen durch übereinstimmendes Bildungsgesetz in beiden Stationen synchronisierten Pseudo-Zufallsimpulsfolgen kommt dagegen ohne besondere, synchronisierende Signalübertragung aus, wenn die Informationsübertragung ohnehin synchron mit entsprechenden Impulsfolgen gemäss der Bitrate der angewendeten Informations-Uebertragungsgeschwindigkeit erfolgt.

Unabhängig von der jeweils angewendeten Art der Zufalls- bzw. Steuerimpulserzeugung ermöglicht die angegebene Lösung eine gleichzeitige Umschaltauslösung der Schlüsselsignalfolgen in beiden Stationen ohne besondere Synchronisierungsanforderungen an die Umschalt-Auslösebefehle in beiden Stationen. Für letztere ist vielmehr nur die übereinstimmende Festlegung eines Rahmen-Zeitintervalls in beiden Stationen erforderlich, was im Hinblick auf die vergleichsweise grosse Zeitdauer dieser Intervalle ohne Schwierigkeit möglich ist, während für die zeitliche Lage der Auslösebefehle innerhalb dieses Rahmen-Zeitintervalls keine besonderen Anforderungen zu stellen sind. Auch ist für den unbefugten Empfänger die Erfassung der Umschaltung durch die Aktivierung mit Hilfe von nicht oder nur schwer vorherbestimmbaren Zufallsimpulsen erschwert, ohne dass die Synchronisierung der Umschaltausführung für den Befugten erschwert wäre.

- 5 -

Nach einer besonderen Ausgestaltung des erfindungsgemässen Verfahrens wird das Rahmen-Zeitintervall sende- und empfangsseitig übereinstimmend durch einen vorgegebenen Zählzyklus der Zufallsimpulse bestimmt. Dies ermöglicht eine vorteilhaft einfache und sichere Festlegung und Synchronisierung der genannten Intervalle mit einfachen Schaltungsmitteln, wobei in weiterer Ausgestaltung die dem Rahmen-Zeitintervall entsprechenden Zählzyklen sende- und empfangsseitig durch Rückstellung synchronisiert werden können.

Weitere Merkmale und Vorteile der Erfindung werden anhand der in den Zeichnungen wiedergegebenen Beispielsausführung erläutert.

Hierin zeigt:

Fig. 1   das Prinzipschema eines Informationsübertragungs- und Verschlüsselungssystems mit Sende- und Empfangsstation,

Fig. 2   das Funktionsschaltbild der Sende- und Empfangsstation,

Fig. 3   ein Mehrfach-Signaldiagramm zur Wirkungsweise der Schaltungen nach Fig. 2 und

Fig. 4   das Blockschaltbild einer Beispielsausführung eines Schlüsselsignalgenerators für ein System nach Fig. 2.

- 6 -

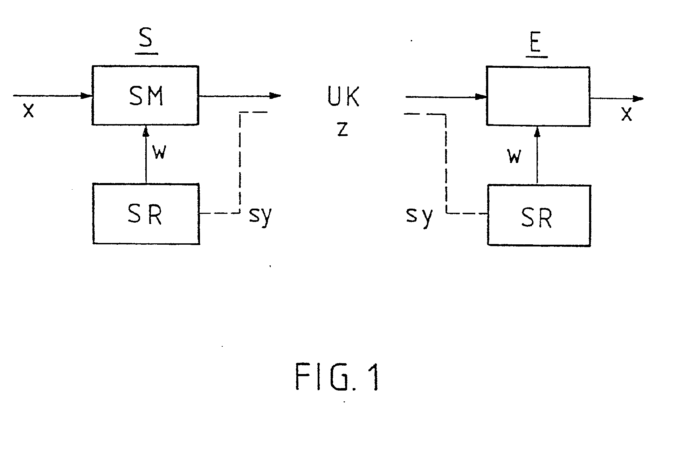

Nach der in Fig. 1 angedeuteten Prinzipanordnung ist in der Sendestation S ein Schlüsselmodulator SM mit zugehörigem Schlüsselrechner SR als Verschlüsselungseinrichtung und in der Empfangsstation E ein Schlüsseldemodulator SD mit zugehörigem Schlüsselrechner SR als Entschlüsselungseinrichtung vorgesehen. Dem Schlüsselmodulator SM wird die einem Klarsignal entsprechende Impulsfolge x sowie vom Schlüsselrechner eine Impulsfolge w als Schlüsselsignal zugeführt. Durch die laufende Mischung der Schlüsselsignal- und Klarsignalbits ergibt sich die Impulsfolge z des verschlüsselten Signals, welches über einen Uebertragungskanal UK zur Empfangsstation E gelangt. Hier wird der Schlüsseldemodulator SD wiederum mit den Impulsfolgen z und w beaufschlagt, woraus die Klarsignal-Impulsfolge x (der Einfachheit halber in gleicher Weise bezeichnet wie auf der Sendeseite) wiedergewonnen wird.

Für eine korrekte Entschlüsselung auf der Empfangsseite muss der dortige Schlüsselrechner mit dem sendeseitigen Schlüsselrechner genau synchronisiert werden. Bei einem transparenten Verschlüsselungssystem erfolgt die Synchronisierung beispielsweise durch eine Synchronisiersequenz, die zu Beginn der Uebertragung vom Sender zum Empfänger übermittelt wird.

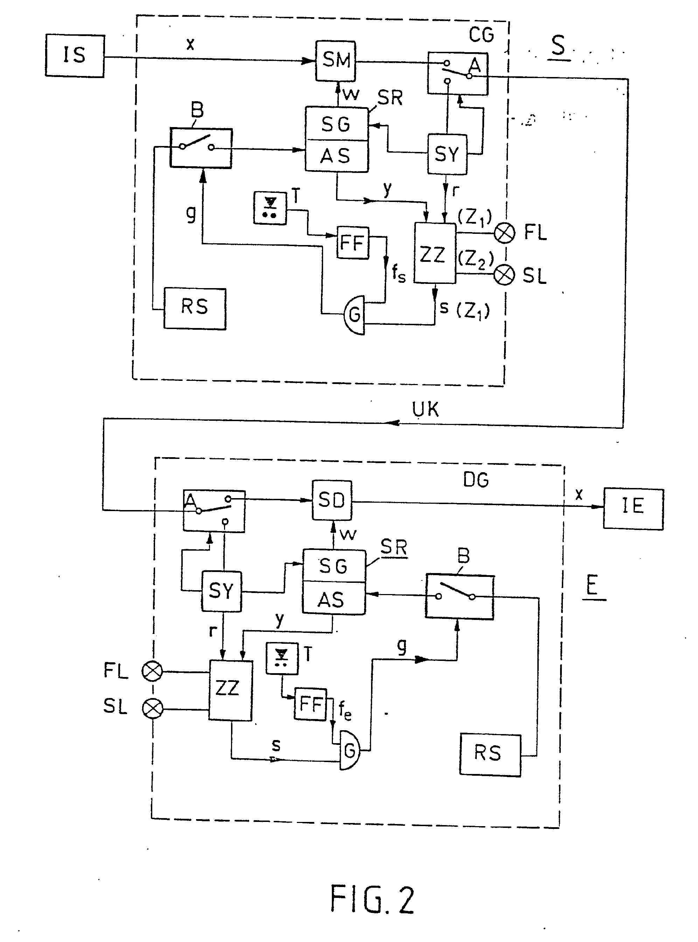

Wie aus dem Funktionsschaltbild nach Fig. 2 ersichtlich ist, wird in der Sendestation S die Klarsignal-Impulsfolge x von einem Informationssender IS einem Verschlüsselungsgerät CG zugeführt, welches unter anderem den Schlüsselmodulator SM mit zugeordnetem Schlüsselrechner enthält. Letzterer besteht im Beispielsfall aus einem Schlüsselsignalgenerator SG mit zugehörigem Arbeitsspeicher AS. In der Empfangsstation E ist entsprechend ein Entschlüsselungsgerät DG mit Schlüsseldemo-

- 7 -

dulator FD und zugehörigem Schlüsselrechner, wiederum in
Form eines Schlüsselsignalgenerators SG mit Arbeitsspeicher
AS, und mit nachgeordneten Informationsempfänger IE vorgesehen. Letzterer erhält die vom Demodulator SD rekonstruierte
Klarsignal-Impulsfolge x, die hier der Einfachheit halber
in gleicher Weise wie die sendeseitig zugeführte Klarsignal-
Impulsfolge bezeichnet ist.

Der Gleichlauf der (in nicht dargestellter Weise durch ein
Taktsignal          gesteuerten) Schlüsselsignalgeneratoren
SG auf der Sende- und Empfangsseite wird durch je eine zugehörige Synchronisiereinrichtung SY bewirkt, und zwar beispielsweise in an sich üblicher Weise durch Senden bzw.
Empfang von besonderen Synchronisiersignalen im Fall einer Uebertragungsunterbrechung. Hierzu schalten sich die Synchronisiereinrichtungen über je einen zugehörigen Umschalter A auf
den Uebertragungskanal UK. Das Ende einer Betriebsunterbrechung wird beispielsweise durch Erkennen des Synchronisiersignals der jeweiligen Gegenstation festgestellt, worauf ein den Gleichlauf beider Stationen auslösender Synchronisierimpuls oder eine entsprechende Synchronisierimpulsfolge ausgesendet wird. Intern wird hierdurch in jeder
Station der Schlüsselsignalgenerator in einen definierten
Anfangszustand versetzt, worauf er im Synchronbetrieb bezüglich der Gegenstation autonom weiterarbeitet.

- 8 -

Der Schlüsselsignalgenerator SG arbeitet jeweils unmittelbar mit dem Arbeitsspeicher AS zusammen, wobei die in letzterem gespeicherte Schlüsselzahl oder mehrere derselben die augenblicklich wirksame Schlüsselsignal-Impulsfolge w bestimmen. Ferner ist jeweils in der Sende- und Empfangsstation ein Reservespeicher RS sowie ein Schalter B vorgesehen, mittels dessen eine im Reservespeicher befindliche Schlüsselzahl oder mehrere derselben in den Arbeitsspeicher überführt werden können. Im Beispielsfall ist angenommen, dass eine solche Neueinspeicherung in den Arbeitsspeicher einer Schlüsselsignalumschaltung entspricht. Diese Einspeicherung bzw. Umschaltung wird am Schalter B durch ein Steuersignal g bewirkt, und zwar in noch zu erläuternder Weise jeweils nach einem ausgewählten Rahmen-Zeitintervall synchron in beiden Stationen.

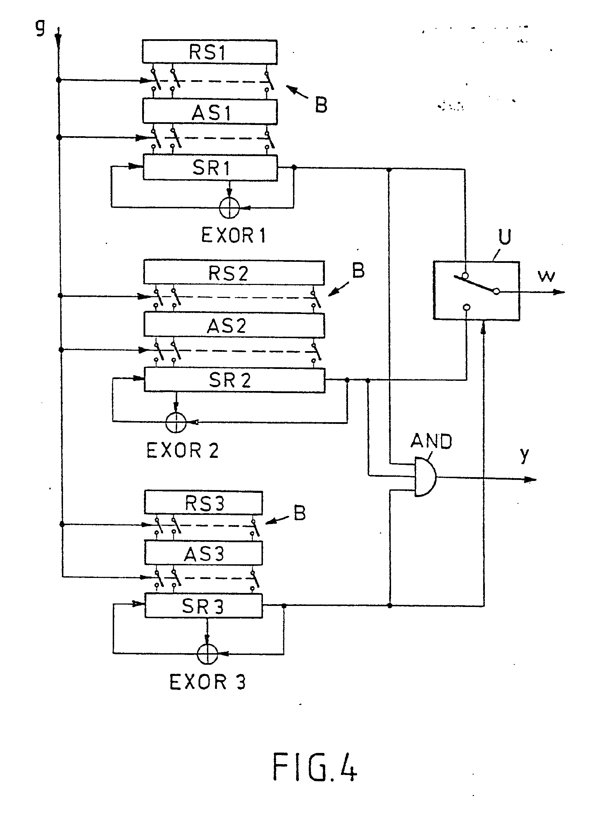

Die Rahmen-Zeitintervalle sollen im allgemeinen so gross bemessen sein, dass innerhalb ihrer Dauer auch manuelle Schalthandlungen zur Vorbereitung der Schlüsselsignalumschaltung und gegebenenfalls zur Verständigung zwischen beiden Stationen über das betreffende Rahmen-Zeitintervall durch Informationsaustausch - gegebenenfalls über zusätzliche Kanäle - bequem durchgeführt werden können. Aus diesem Grund ist eine in Bezug auf die mittlere Periodendauer der Schlüsselsignal-Impulsfolge grössere Dauer der Rahmen-Zeitintervalle erforderlich. Zu diesem Zweck werden die Intervalle im Beispielsfall durch eine Zufallsimpulsfolge y bestimmt, die ihrerseits durch Frequenzuntersetzung aus der Schlüsselsignal-Impulsfolge oder in Abhängigkeit von dieser erzeugt wird. Ein hierfür geeigneter Mechanismus wird weiter unten noch mit Bezug auf die Schaltung in Fig. 4 er-

- 9 -

läutert.

Die Rahmen-Zeitintervalle selbst werden im Beispiel nach Fig. 2 durch einen umlaufenden Zähler ZZ gebildet, der nach Erreichen des höchsten Zählerstandes wieder von Null an zu zählen beginnt. Wie in Fig. 2 durch verschiedene Ausgänge ($Z_1$, $Z_2$) angedeutet, werden dem Zähler im Verlauf seiner Umläufe jeweils zwei Impulse entnommen, und zwar jeweils bei Erreichen eines Zählerstandes $Z_1$ und $Z_2$. Eine solche Impulsentnahme kann bekanntlich mit einfachen, handelsüblichen und keiner näheren Erläuterung bedürfenden Schaltungsmitteln durch Decodierung der entsprechenden, binären Zähler-Schaltzustände erreicht werden. Einer der beiden Zählerstände bzw. Ausgangsimpulse, hier beispielsweise $Z_1$, markiert Ende und Anfang eines Rahmen-Zeitintervalls, während der andere, hier also $Z_2$, das Rahmen-Zeitintervall in zwei Teilintervalle zerlegt. Der Einfachheit halber kann beispielsweise $Z_1$ dem höchsten Zählerstand des Umlaufzählers entsprechen. Jeweils beim Zählerstand $Z_1$ wird an einem eigenen Ausgang ein Impuls einer Steuerimpulsfolge s erzeugt, womit jeweils Ende und Anfang eines Rahmen-Zeitintervalls markiert sind. Aus dieser Steuerimpulsfolge wird jeweils dann ein wirksamer Steuerimpuls g zum Schalter B mittels eines Gatters G durchgeschaltet, wenn letzteres durch manuelle Betätigung eines Schalters T und entsprechendes Setzen eines Speicher-Flip-Flops FF durch ein entsprechendes Freigabesignal $f_s$ bzw. $f_e$ freigegeben ist. Der Gleichlauf der sende- und empfangsseitigen Steuerimpulsfolge s und damit der wirksamen Steuerimpulse am Schalter B wird dadurch gewährleistet, dass bei jeder Synchronisierung der Schlüsselsignalgeneratoren durch die

BAD ORIGINAL

- 10 -

Synchronisiereinrichtungen SY eine Rücksetzung der Zähler ZZ durch einen Rücksetzimpuls r ausgelöst wird.

Die Aufteilung des Rahmen-Zeitintervalls durch Decodierung des Zählerstandes Z2 hat folgende Funktion: Während des ersten Teilabschnitts wird durch einen zugehörigen Signalgeber FL und während des zweiten Teilabschnitts durch einen zugehörigen Signalgeber SL für den Operateur der betreffenden Station eine entsprechende Information gegeben, beispielsweise in Form von optischen Signalen unterschiedlicher Farbe. Während nun grundsätzlich vereinbart werden kann, dass der Operateur den Tastschalter T während des ganzen Rahmen-Zeitintervalls betätigt, um damit die Schlüsselsignalumschaltung vorzubereiten, kann beispielsweise eine Schalterbetätigung nur während des ersten Teilabschnitts vorgeschrieben werden, d.h. während des Signals vom Signalgeber FL. Der zweite, durch SL signalisierte Teilabschnitt bildet dann ein Sicherheitsintervall, wodurch ein zu spätes Betätigen des Tastschalters verhindert wird.

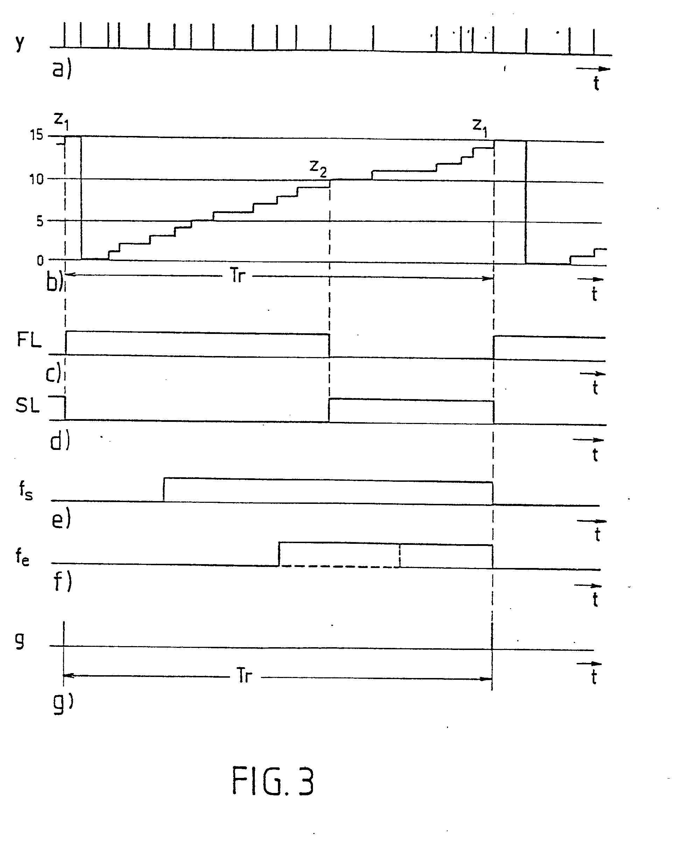

Nunmehr wird die Wirkungsweise der Schaltung nach Fig. 2 anhand der Zeitdiagramme in Fig. 3 näher erläutert.

In Zeile a) von Fig. 3 ist eine Pseudo-Zufallsimpulsfolge y angedeutet, wie sie beispielsweise mit der noch zu erläuternden Schaltung nach Fig. 4 in der Sende- und Empfangsstation synchron gebildet wird. In Zeile b) ist ein durch Aufwärtszählen zwischen 0 und $Z_1$ im Zähler ZZ gemäss Fig. 2 bestimmtes Rahmen-Zeitintervall Tr angedeutet. Die einzelnen Zählschritte und damit auch der Neubeginn einer Zählung nach Erreichen von $Z_1$ beim Zählerstand 0 erfolgt synchron

- 11 -

mit den Impulsen der Folge y. In Zeile c) ist das Signal des Signalgebers SL zur Markierung des für die Umschaltauslösung vorgesehenen Teilabschnitts von Tr und in Zeile d) das Signal des Signalgebers SL zur Markierung des restlichen Teilabschnitts als Sicherheitsintervall angedeutet. In Zeile e) ist das sendeseitige Umschalt-Freigabesignal $f_s$ und in Zeile f) das empfängerseitige Freigabesignal $f_e$ angedeutet. Ersichtlich können diese beiden Signale innerhalb des vergleichsweise grossen Rahmen-Zeitintervalls Tr entsprechend einer manuellen Auslösung zu verschiedenen Zeitpunkten, d.h. asynchron, gegeben werden. Unabhängig davon erfolgt jeweils am Ende des ausgewählten Rahmen-Zeitintervalls die tatsächliche Umschaltung der Schlüsselsignalfolge durch Betätigung des Schalters B (siehe Fig. 2) mit dem in Zeile g) angedeuteten Steuerimpuls g, also gleichzeitig in beiden Stationen.

Gegebenenfalls kann diese Umschaltung auch durch ein externes Steuersignal ausgelöst werden, wobei ebenfalls die asynchrone Vorwahl in beiden Stationen eine Erleichterung darstellt.

Bei der in Fig. 4 angedeuteten Schaltung des Schlüsselsignalgenerators werden beispielsweise drei rückgekoppelte Schieberegister $SR_1$ bis $SR_3$, die in nicht näher dargestellter Weise mit dem Taktsignal als Schiebeimpulse versorgt werden, zur Erzeugung einer Pseudo-Zufallsimpulsfolge w als Schlüsselsignal verwendet. Bekanntlich hängt die Impulsfolge eines jeden rückgekoppelten Schieberegisters von der Art des Rückkopplungsnetzwerkes ab. Im Beispielsfall ist eine vergleichsweise einfache Rückkopplung von nur zwei Schieberegisterstufen über ein Exklusiv-ODER-Gatter $EXOR_1$ bis $EXOR_3$

- 12 -

Durch den Aufbau der Rückkopplungsnetzwerke ist sichergestellt, dass die zeitliche Aufeinanderfolge der Gesamtschaltzustände der Register, d.h. die Aufeinanderfolge der
jeweils im Register stehenden Binärzahl, und damit auch
die Ausgangsimpulsfolge der einzelnen Register alle möglichen Kombinationen durchläuft und damit die maximal
mögliche Periodendauer aufweist. Der Anfangszustand der
Schaltzustandsfolge in jedem Register wird durch eine im
zugehörigen Arbeitsspeicher $AS_1$ bis $AS_3$ befindlichen, in
ihrer Stellenzahl dem Register entsprechenden, geheimen
Schlüsselzahl bestimmt. Um die neuen, in RS1 bis RS3
gespeicherten Schlüsselzahlen zu aktivieren, werden diese
mit dem Steuerimpuls g durch durch Betätigen des Schalters
B in die Arbeitsspeicher und gleichzeitig bzw. mit geeigneter Schaltverzögerung in die Register eingegeben.

Eine Ausdehnung der tatsächlich wirsamen Schlüsselsignal-
Impulsfolge w bezüglich der Ausgangsimpulsfolgen der einzelnen Register wird in der Beispielsausführung durch
wechselweise Aufschaltung der Ausgänge der Register $SR_1$ und
$SR_2$ über einen Umschalter U auf den Ausgang des Schlüsselsignalgenerators erreicht. Diese Umschaltung wird ihrerseits durch die vom Register $SR_3$ erzeugte Zufalls-Impulsfolge gesteuert. Hierzu kann gegebenenfalls das letztgenannte

- 13 -

Register mit einem bezüglich der anderen langsameren Schiebetakt versorgt werden.

Eine in ihrer mittleren Folgefrequenz untersetzte Pseudo-Zufallsimpulsfolge $y$ wird im Beispielsfall durch Auskoppeln einer vorgegebenen, hier dreistelligen Binärzahl aus den Ausgangsimpulsfolgen der drei Register mittels eines UND-Gatters AND erreicht.

Abweichend von dem dargestellten Beispiel sind unterschiedliche Methoden der Schlüsselsignalumschaltung anwendbar. Insbesondere kann diese Umschaltung auch durch Wechsel der Entnahmestellen oder durch eine andere Schaltungsänderung an einem zugehörigen Schlüsselsignalgenerator vorgenommen werden. Beispielsweise kommt eine Umschaltung eines Rückkopplungsausganges an einem Register in Betracht, wie dies strichliert am Register $SR_2$ in Fig. 4 angedeutet ist. Gegebenenfalls kommt eine Voreinstellung einer solchen Umschaltung mit Hilfe von zusätzlichen Schaltern in Betracht.

Es kann vorkommen, dass aus irgendeinem Grund in Sender und Empfänger verschiedene Intervalle ausgewählt werden. In diesem Fall geht der Gleichlauf der sende-/ und empfangsseitigen Schlüsselsignale $w$ ab dem Ende des ersten gewählten Intervalls verloren und wird auch am Ende des zweiten gewählten Intervalls nicht wieder hergestellt. Man wird daher mit Vorteil die Chiffriergeräte so auslegen, dass in einem solchen Fall eine automatische Neusynchronisierung der Geräte mit dem neuen Schlüssel erfolgt. Für die angeschlossenen Teilnehmer äussert sich in diesem Fall der Schlüsselwechsel lediglich durch einen kurzen Unterbruch bzw. Störburst.

- 14 -

Der Gleichlauf zwischen Sender und Empfänger geht natürlich auch dann verloren, wenn die neuen Schlüssel in Sender und Empfänger aus irgendeinem Grund verschieden sind. In diesem Fall verläuft auch eine Neusynchronisierung mit dem neuen Schlüssel erfolglos, was insbesondere bei automatischer oder Fernauslösung des Schlüsselwechsels schwerwiegend ist. Man wird daher die Geräte mit Vorteil derart auslegen, dass nach misslungenem synchronen Schlüsselwechsel und länger dauernder erfolgloser Neusynchronisierung automatisch wieder auf den alten Schlüssel zurückgegriffen wird, wobei dieser Fall durch einen Alarm angezeigt wird.

- 15 -

B e z e i c h n u n g s l i s t e

s         Sendestation

SM       Schlüsselmodulator

SR       Schlüsselrechner

E         Empfangsstation

SD,FD   Schlüsseldemodulatoren

x         Impulsfolge

w,w*    Impulsfolgen

z         Impulsfolge

UK       Uebertragungskanal

IS       Informationssender

CG       Verschlüsselungsgerät

SG       Schlüsselsignalgenerator

$AS_1$-$AS_3$ Arbeitsspeicher

DG       Entschlüsselungsgerät

IE       Informationsempfänger

SY       Synchronisiereinrichtung

A         Umschalter

$RS_1$-$RS_3$ Reservespeicher

B         Schalter

g         Steuersignal

y         Pseudo-Zufallsimpulsfolge

ZZ       Zähler

$0,Z_1,Z_2$ Zählerstand

- 16 -

| | |
|---|---|
| s | Steuerimpulsfolge |
| G | Gatter |
| T | Tastschalter |
| FF | Speicher-Flipp-Flopp |
| $f_s, f_e$ | Freigabesignale |
| r | Rücksetzimpuls |
| FL,SL | Signalgeber |
| Tr | Rahmen-Zeitintervall |
| $SR_1$-$SR_3$ | Schieberegister |
| $EXOR_1$-$EXOR_3$ | Exklusiv-ODER-Gatter |
| U | Umschalter |
| AND | UND-Gatter |
| $w_s, w_e$ | Schlüsselsignalfolge |

- 1 -

Patentansprüche

1. Verfahren zur verschlüsselten Nachrichtenübertragung mit sendeseitiger Erzeugung einer verschlüsselten Signalfolge durch Modulation einer Klarsignalfolge mit einer Schlüsselsignalfolge sowie mit empfangsseitiger Rückgewinnung der Klarsignalfolge durch Demodulation der übertragenen, verschlüsselten Signalfolge mit einer Schlüsselsignalfolge, die mit der modulierenden Schlüsselsignalfolge der Sendeseite übereinstimmt, gekennzeichnet durch folgende Merkmale:

a) Die sende- und empfangsseitig wirksame, modulierende bzw. demodulierende Schlüsselsignalfolge (w wird durch mindestens eine Umschaltung auf der Sende- und Empfangsseite in gleicher Weise und gleichzeitig verändert;

b) Auf der Sende- und Empfangsseite wird in übereinstimmender zeitlicher Zuordnung zu der modulierenden bzw. demodulierenden Schlüsselsignalfolge (w eine auf der Sende- und Empfangsseite synchrone Zufallsimpulsfolge (y) mit einer in Bezug auf die mittlere Folgefrequenz der Schlüsselsignalfolge geringen mittleren Folgefrequenz erzeugt;

c) Die sende- und empfangsseitige Umschaltung der Schlüsselsignalfolge ( w ) wird durch zwischen der Sende- und Empfangsseite übereinstimmend festgelegte Auswahl eines Rahmen-Zeitintervalls (Tr) vorbereitet und durch einen das Ende dieses Rahmen-Zeitintervalls (Tr) markierenden, von der Zufallsimpulsfolge (y) abgeleiteten Steuerimpuls (g) ausgelöst.

2. Verfahren nach Anspruch 1, dadurch gekennzeichnet, dass das Rahmen-Zeitintervall (Tr) sende- und empfangsseitig übereinstimmend durch einen vorgegebenen Zählzyklus der Zufallsimpulse (y) bestimmt wird.

3. Verfahren nach Anspruch 2, dadurch gekennzeichnet, dass die dem Rahmen-Zeitintervall (Tr) entsprechenden Zählzyklen sende- und empfangsseitig durch Rückstellung synchronisiert werden.

4. Verfahren nach Anspruch 2 oder 3, dadurch gekennzeichnet, dass ein Zufallsimpuls (s), der einem vorgegebenen Zählstand innerhalb des sende- und empfangsseitigen Zählzyklus entsprechend dem Rahmen-Zeitintervall (Tr) zugeordnet ist, zur Auslösung des Steuersignals (g) für die Umschaltung der Schlüsselsignalfolge (w) verwendet wird.

5. Verfahren nach einem der Ansprüche 2 bis 4, dadurch gekennzeichnet, dass ein Rahmen-Zeitintervall (Tr) durch sende- und empfangsseitig vereinbarte, jedoch asynchron durchgeführte Schalthandlungen bestimmt wird.

6. Verfahren nach einem der vorangehenden Ansprüche, dadurch gekennzeichnet, dass die Umschaltung der Schlüsselsignalfolge (w) durch Aktivierung voreingestellter, die Erzeugung der Schlüsselsignalfolge (w) bestimmender Schlüsselzahlen (z) bewirkt wird.

7. Verfahren nach Anspruch 6, dadurch gekennzeichnet, dass mehrere Schlüsselzahlen gespeichert werden, von denen eine vor der Umschaltung der Schlüsselsignalfolge durch ein Steuersignal zur Aktivierung voreingestellt wird.

8. Verfahren nach Anspruch 6, dadurch gekennzeichnet, dass mehrere Schlüsselzahlen gespeichert werden, von denen eine vor der Umschaltung der Schlüsselsignalfolge (w) durch sende- und empfangsseitig vereinbarte Einstellung eines Wahlschalters zur Aktivierung voreingestellt wird.

9. Verfahren nach einem der vorangehenden Ansprüche, dadurch gekennzeichnet, dass durch die Umschaltung der Schlüsselsignalfolge (w) zwei sende- und empfangsseitig übereinstimmend vorgegebene Signalfolgen wahlweise zur Wirkung gebracht werden.

10. Einrichtung zur Durchführung des Verfahrens nach Anspruch 1, mit einer sendeseitigen Schlüsselungseinrichtung, der die Klarsignalfolge (x) und die Schlüsselsignalfolge (w) zur Gewinnung der verschlüsselten Signalfolge zugeführt werden, und mit einer empfangsseitigen Entschlüsselungseinrichtung, der die übertragenen, verschlüsselten Signale sowie eine Schlüsselsignalfolge (w) zur Rückgewinnung der Klarsignalfolge (x) zugeführt werden, gekennzeichnet durch folgende Merkmale:

- 4 -

a) Auf der Sende- und Empfangsseite sind Mittel (SG, SY) zur Erzeugung einer in Bezug auf die Signalübertragung zwischen Sende- und Empfangsseite langsamen Zufallsimpulsfolge (y) mit nachgeordneten Mitteln (ZZ) für die Erzeugung einer bezüglich dieser Zufallsimpulsfolge (y) untersetzten Steuerimpulsfolge (s) vorgesehen;

b) Auf der Sende- und Empfangsseite sind Mittel (T, G) zur Bestimmung eines durch aufeinanderfolgende Impulse der Steuerimpulsfolge (s) bestimmten Rahmen-Zeitintervalls (Tr) vorgesehen;

c) Auf der Sende- und Empfangsseite ist mindestens je ein Umschalter (B) vorgesehen, der in Abhängigkeit von der vorbereitenden Bestimmung eines Rahmen-Zeitintervalls (Tr) durch den das Ende dieses Rahmen-Zeitintervalls (Tr) markierenden Steuerimpuls (s) zur Umschaltung der Schlüsselsignalfolge (w) aktivierbar ist.

11. Einrichtung nach Anspruch 10, dadurch gekennzeichnet, dass jeweils das einem Umschaltzeitpunkt für die Schlüsselsignalfolge (w) vorangehende Rahmen-Zeitintervall (Tr) durch Betätigung eines Schalters (T) bestimmbar ist.

12. Einrichtung nach Anspruch 10, dadurch gekennzeichnet, dass jeweils das einem Umschaltzeitpunkt der Schlüsselsignalfolge (w) vorangehende Rahmen-Zeitintervall (Tr) durch ein äusseres Steuersignal bestimmbar ist.

13. Einrichtung nach Anspruch 11 oder 12, dadurch gekennzeichnet, dass die Steuerimpulse (s) für die Umschaltung der Schlüsselsignalfolge (w) durch einen umlaufenden Zähler (ZZ) erzeugt werden, der durch von einem Schlüsselsignalgenerator erzeugte Zufallsimpulse (y) fortgeschaltet wird, und dass jeweils ein Steuerimpuls (s) beim Durchlaufen eines vorbestimmten Zählerstandes erzeugt wird.

14. Einrichtung nach Anspruch 13, dadurch gekennzeichnet, dass innerhalb eines Rahmen-Zeitintervalls (Tr) jeweils zwei Abschnitte für die sende- und empfangsseitig übereinstimmende Vorbereitung der Schlüsselsignalumschaltung angezeigt werden.

15. Einrichtung nach Anspruch 14, dadurch gekennzeichnet, dass zur Erzeugung der Anzeigesignale ein zusätzlicher Zählerstand des umlaufenden Zählers (ZZ) detektiert wird.

16. Einrichtung nach einem der Ansprüche 12 bis 15, dadurch gekennzeichnet, dass die Umschaltung der Schlüsselsignalfolge durch Wechsel einer Entnahmestelle oder durch eine Schaltungsänderung an einem zugehörigen Schlüsselsignalerzeuger (SG) erfolgt.

17. Einrichtung nach einem der Ansprüche 12 bis 15, dadurch gekennzeichnet, dass die Schlüsselungs- und die Entschlüsselungseinrichtung Schlüsselzahlspeicher (AS, RS) zur Speicherung voreingestellter, die Schlüsselsignalfolge bestimmender Schlüsselzahlen aufweisen und dass

– 6 –

diese Schlüsselzahlspeicher (AS, RS) wahlweise mit den zugehörigen Schlüsselsignalgeneratoren (SG) verbindbar sind.

18. Einrichtung nach Anspruch 17, dadurch gekennzeichnet, dass nach erfolgtem Wechsel der Schlüsselzahlen jeweils die alten Schlüsselzahlen gelöscht werden.

19. Einrichtung nach einem der Ansprüche 12 bis 18, dadurch gekennzeichnet, dass die Schlüsselung- und die Entschlüsselungseinrichtung zusätzlich Schalter aufweisen, die zur Wahl der durch die Umschaltung vorzunehmenden Schaltungsänderung voreinstellbar sind.

20. Einrichtung nach einem der Ansprüche 12 bis 19, dadurch gekennzeichnet, dass die Umschaltung der Schlüsselsignalfolge (w) durch Betätigung eines Bereitschaftsschalters (T) vorbereitet wird, der eine Aktivierung der Umschaltung nur in einer vorgegebenen Arbeitsstellung zulässt.

21. Einrichtung nach einem der Ansprüche 12 bis 20, dadurch gekennzeichnet, dass bei Verlust der Synchronisierung der Schlüsselsignalfolgen (w) bzw. der Zufallsimpulsfolgen (y) auf der Sende- und Empfangsseite bei einer Umschaltung der Schlüsselsignalfolge (w) selbsttätig eine Neu-Synchronisierung der Schlüsselsignalgeneratoren (SG) mit der Neueinstellung der Schlüsselsignalfolgen (w) erfolgt.

22. Einrichtung nach Anspruch 21, dadurch gekennzeichnet, dass bei erfolgloser Neu-Synchronisierung mit der Neueinstel-

- 7 -

lung der Schlüsselsignalfolgen (w) selbsttätig eine
Neu-Synchronisierung der Schlüsselsignalgeneratoren
(SG) mit der alten Schlüsselsignaleinstellung sowie
gleichzeitig eine Alarmgabe erfolgt.

FIG. 1

FIG.2

FIG. 3

FIG.4

**0028272**

Nummer der Anmeldung
EP 79 20 0709

Europäisches
Patentamt

**EUROPÄISCHER RECHERCHENBERICHT**

| | EINSCHLÄGIGE DOKUMENTE | | KLASSIFIKATION DER ANMELDUNG (Int Cl ) |
|---|---|---|---|
| Kategorie | Kennzeichnung des Dokuments mit Angabe, soweit erforderlich, der maßgeblichen Teile | betrifft Anspruch | H 04 L 9/02 |
| | US - A - 3 740 475 (EHRAT) <br><br> * Spalte 2, Zeile 41 bis Spalte 3, Zeile 12, Zeilen 23-31; Spalte 7, Zeilen 1-4 * <br><br> -- | 1,5,10 | |
| | DE - A - 1 549 067 (SIEMENS) <br><br> * Seite 2, letzter Abschnitt bis Seite 3, Zeile 2; Seite 5, Abschnitt 3; Seite 7, Zeile 11 bis Seite 8, Zeile 5 * <br><br> -- | 1,10 | |
| A | FR - A - 2 288 428 (ERICSSON) <br><br> * Seite 6, Zeilen 23-26 * <br><br> -- | 1 | RECHERCHIERTE SACHGEBIETE (Int Cl ) <br><br> H 04 L 9/02 <br> 9/00 <br> 9/04 <br> G 09 C 1/10 <br> 1/06 |
| E | GB - A - 1 566 442 (MARCONI) <br><br> * Seite 1, Zeilen 31-38; Seite 2, Zeilen 18-34 * <br><br> -- - - - | 1,10 | |

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-02-1981 | HOLPER |

EPA form 1503.1  06.78

BAD ORIGINAL